# EUROPEAN PATENT APPLICATION

(11) **EP 2 149 967 A2**
(43) Date of publication of application: **03.02.2010**
(21) Application number: 09166648.7
(22) Date of filing: 28.07.2009
(51) Int. Cl.: H02K 9/18

(54) **Sealed type electric rotating machine**

(30) Priority: 29.07.2008 JP 2008194278
(71) Applicant: Hitachi Ltd., Tokyo (JP)
(72) Inventor: Iwai, Yasushi, Tokyo 100-8220 (JP); Iwashige, Kengo, Tokyo 100-8220 (JP); Iizuka, Motonobu, Tokyo 100-8220 (JP); Fujigaki, Tetsuo, Tokyo 100-8220 (JP); Kimura, Mamoru, Tokyo 100-8220 (JP); Kori, Daisuke, Tokyo 100-8220 (JP)
(74) Representative: Kirschner, Klaus Dieter

(57) **Abstract**

In a sealed type electric rotating machine, in which a cooling medium inflows from both end sides of a rotating shaft (1) of a claw-pole type rotor (2), a cooling medium having passed through a heat exchanging part (11) divides into one on an exhaust side (13A) and one on an intake air side (13B) to be used again for cooling of the claw-pole type rotor (2) and a stator (6). That is, on the exhaust side (13A), a cooling medium put in a state of being high in temperature as compared with that on the intake air side (13B) performs cooling, and the rotor and the stator are made higher in temperature on the exhaust side than on the intake air side. It is an object of the invention to level temperature profiles of the claw-pole type rotor (2) and the stator (6) in an axial direction to decrease maximum temperatures of the rotor and the stator.

In order to attain the object, the invention has a feature in that a partition (23), which cuts off an axial duct (5), is provided toward the exhaust side relative to a center in the axial direction.

## Description

### Background of the Invention

The present invention relates to a sealed type electric rotating machine, and more particular, to a sealed type electric rotating machine suited to cooling a cooling medium, which cools a body of the electric rotating machine to be heated, with a heat exchanger to reuse the same for cooling of the body of the electric rotating machine.

An electric rotating machine comprises a rotor that rotates together with a rotating shaft and includes an axially extending duct, and a stator arranged radially outwardly of the rotor to be opposed thereto with a predetermined clearance therebetween, and is typical as a generator and a motor. In particular, a sealed type electric rotating machine among electric rotating machines is one, in which a cooling medium is circulated in a sealed vessel to pass through an interior of the electric rotating machine to perform cooling. While there is a possibility that when an atmosphere in an environment of installation is introduced intact into an electric rotating machine, an equipment in the electric rotating machine in a place such as desert and beach is damaged or rusted by an air containing sand and salt to undergo deterioration, a sealed type electric rotating machine can perform cooling and suppress deterioration without taking in an outside atmosphere and so is useful in such environment as compared with, in particular, an open type electric rotating machine.

Kinds of such sealed type electric rotating machines include one, in which a cooling medium inflows only from one side of a rotor in an axial direction to cool the rotor and a stator, and one, in which a cooling medium inflows from both end sides of a rotating shaft of a rotor to cool the rotor and a stator.

With the former, sealed type electric rotating machine, in which a cooling medium inflows only from one of ends of a rotating shaft of the rotor, a cooling medium takes heat from the rotor and the stator, which are high in temperature, so that as the cooling medium moves from an inflowing side to an outflowing side in a direction along the rotating shaft, the cooling medium is increased in temperature and the cooling medium taking heat rises in temperature. Therefore, the rotor and the stator are hard to be cooled since the cooling medium is made high in temperature on the outflowing side when a comparison is made between the outflowing side and the inflowing side.

On the other hand, the latter, sealed type electric rotating machine is disclosed in, for example, JP-A-2000-245108. The JP-A-2000-245108 discloses that construction, in which a cooling medium having cooled a rotor and a stator passes through a heat exchanger mounted radially outwardly of the stator to perform heat exchange, and then divides into both sides in an axial direction to inflow from both axial ends of the rotor to cool the rotor and the stator again. With such construction, since the cooling medium inflows from both axial ends of the rotor, it is possible to avoid a condition, in which a large difference is generated in temperature rise at both axial ends of the rotor and the stator.

Here, with a sealed type electric rotating machine, a cooling medium is circulated in a sealed vessel as described above. Accordingly, a heat exchanger is provided adjacent to a rotor and a stator so as to cool the rotor and the stator to cool the cooling medium having been made high in temperature. Heat exchanger tubes are mounted in the heat exchanger to have an outside air passing therethrough in a direction along a rotating shaft to be made low in temperature as compared with an interior of the machine, and a high-temperature cooling medium contacts with the heat exchanger tubes to be cooled. As an outside air travels to a side, from which it is discharged (an exhaust side), within the heat exchanger tubes, the outside air is heated by the high-temperature cooling medium to rise in temperature, and so the heat exchanger tubes also rise in temperature toward the exhaust side. Accordingly, the cooling medium is small in an extent, to which it is cooled by means of contact with the heat exchanger tubes, on the exhaust side to be made high in temperature as compared with a side, from which an outside air is introduced (an intake air side).

With the sealed type electric rotating machine disclosed in JP-A-2000-245108 described above, a cooling medium having passed through the heat exchanger divides into one on the exhaust side and one on the intake air side and is used again for cooling of the rotor and the stator. That is, on that exhaust side, on which the heat exchanger tubes of the heat exchanger is put in a state of being comparatively high in temperature, a cooling medium being high in temperature as compared with that on the intake air side performs cooling, and the rotor and the stator become higher in temperature on the exhaust side than on the intake air side, so that it is not possible to level a temperature profile in an axial direction and a maximum temperature on the exhaust side becomes high in temperature.

### Summary of the Invention

Hereupon, it is an object of the invention to level temperature profiles of a rotor and a stator in an axial direction to decrease maximum temperatures of the rotor and the stator, thereby heightening an insulating medium, which covers a winding, in durability and an electric rotating machine in reliability of insulation.

In order to attain the object, the invention provides a sealed type electric rotating machine comprising a rotor that rotates together with a rotating shaft and has a duct, through which a cooling medium can pass in an axial direction, a stator arranged radially outwardly of the rotor to be opposed thereto with a predetermined clearance therebetween, a heat exchanging part arranged adjacent to the stator, having a heat exchanger tube, through an interior of which an outside air passes from an intake air side to an exhaust side, and performing heat exchange with a cooling medium in the electric rotating machine, a sealed vessel receiving therein the rotor, the stator, and the heat exchanging part, and a partition provided midway the axial duct of the rotor to cut off a cooling medium against passing through the duct in the axial direction, and wherein the partition is provided toward the exhaust side relative to an axially central position.

With the sealed type electric rotating machine according to the invention, a maximum temperature on an exhaust side is decreased and temperature profiles of a rotor and a stator are leveled in an axial direction to decrease maximum temperatures of the rotor and the stator, whereby an insulating medium, which covers a winding, is heightened in durability and the electric rotating machine is heightened in reliability of insulation.

Other objects, features and advantages of the invention will become apparent from the following description of the embodiments of the invention taken in conjunction with the accompanying drawings.

Brief Description of the Drawings
- Fig. 1: is a cross sectional view perpendicular to an axial direction of a rotor and a stator in a first embodiment of the invention;
- Fig. 2: is an axial, cross sectional view showing a sealed type electric rotating machine according to the first embodiment of the invention;
- Fig. 3: is a view illustrating temperature profiles of a stator winding in an axial direction when a partition is changed in position in the axial direction;
- Fig. 4: is a view indicating maximum temperatures of the stator winding when a partition is changed in position in the axial direction;
- Fig. 5: is a cross sectional view perpendicular to an axial direction of a rotor and a stator in a second embodiment of the invention;
- Fig. 6: is an axial, cross sectional view showing a sealed type electric rotating machine according to the second embodiment of the invention;
- Fig. 7: is a cross sectional view perpendicular to an axial direction of a rotor and a stator in a third embodiment of the invention; and
- Fig. 8: is an axial, cross sectional view showing a sealed type electric rotating machine according to the third embodiment of the invention.

### Detailed Description of the Preferred Embodiments

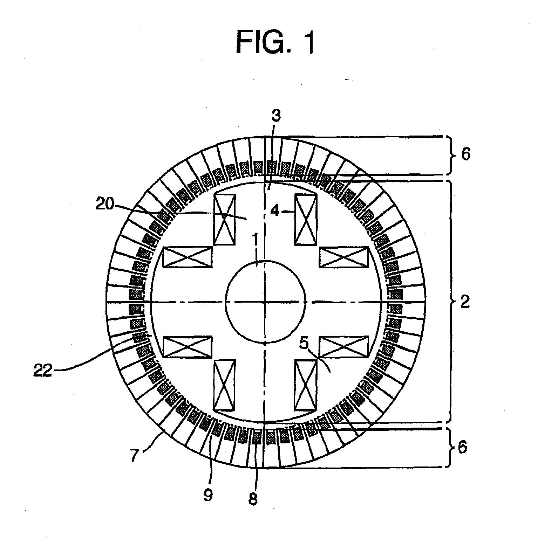

First, a first embodiment of a sealed type electric rotating machine according to the invention will be described with reference to Figs. 1 to 4. The sealed type electric rotating machine according to the first embodiment of the invention substantially comprises an electric rotating machine body 10, a heat exchanging part 11 arranged adjacent to the electric rotating machine body 10 to cool a cooling medium, which has cooled the electric rotating machine body 10, by means of heat exchange, and a sealed vessel 30 that accommodates therein the electric rotating machine body 10 and the heat exchanging part 11.

An explanation will be given to the electric rotating machine body 10. The electric rotating machine body 10 comprises therein a claw-pole type rotor 2 and a stator 6.

The claw-pole type rotor 2 comprises a rotating shaft 1, a rotor core 3 that rotates together with the rotating shaft, and rotor winding coils 4 wound round the rotor core 3, the rotor core 3 having pole heads 21 and pole drum portions 20, which are smaller in width than the pole heads 21, the rotor winding coil 4 being wound round the pole drum portions 20. Axial ducts 5 are formed axially between adjacent pole portions.

The stator 6 is arranged in opposition to and radially outwardly of the claw-pole type rotor 2 with a clearance 22 therebetween. The stator 6 comprises a stator core 7 and a stator winding 8 wound round the stator core 7, and a plurality of radial ducts 9 for axial communication are formed at predetermined intervals in an axial direction on the stator 6. The stator winding 8 is structured with portions thereof extending outward from both axial ends of the stator core 7, the outwardly extending portions being referred to as ends 8A and 8B. Also, the reference numerals 12A and 12B denote inner fans mounted to the rotating shaft 1 to take in a cooling medium from the heat exchanging part 11 to blast the same to the ends 8A and 8B of the stator winding 8 and the axial ducts 5.

The heat exchanging part 11 comprises a plurality of heat exchanger tubes 17 mounted therein, the heat exchanger tubes 17 being axially communicated in the heat exchanging part 11 so as to enable an outside air to pass therein. Partition walls 14A, 14B are provided in the heat exchanging part 11 to partition an interior of the heat exchanging part into a center side and outer sides, that is, heat exchanging part axial end sides 11A, 11B and a heat exchanging part center side 11C. An outer fan 18 is mounted on an exhaust side outside the heat exchanging part 11, the outer fan 18 being driven to push out an air in the heat exchanger tubes 17 to decrease pressures in the tubes to permit an outside air to be sucked into the heat exchanger tubes 17.

Guides 19A, 19B are mounted inside the electric rotating machine body 10 and outside the claw-pole type rotor 2 and the stator 6. The guides 19A, 19B are fixed at one ends thereof to stator frames connected to the partition walls 14A, 14B within the heat exchanging part 11 and the other ends thereof are extended to outside diameter sides of the inner fans 12A, 12B.

In the embodiment, a partition 23 is provided in a position offset toward an outside-air exhaust side (described below with respect to the heat exchanger tubes 17 in the heat exchanging part 11) from axially central positions of the axial ducts 5, and near side and far side of the axial ducts 5 are separated by the partition 23. The partition 23 is formed by the use of a laminated steel sheet not formed with any notches, which form the axial ducts 5.

Here, an explanation will be given to flow of a cooling medium and a cooling cycle attending the same. A cooling medium from the heat exchanging part 11 is blasted into the machine by the inner fans 12A, 12B to branch into two main flows, that is, one passing through the claw-pole type rotor 2 and one passing through the stator winding ends 8A, 8B.

The cooling medium passing through the claw-pole type rotor 2 first enters the axial ducts 5. The cooling medium entering the axial ducts 5 branches into a flow travelling further axially in the axial ducts 5 and a radial flow travelling toward the stator 6 through the clearance 22, and the both flows take heat from the claw-pole type rotor 2 to rise in temperature while travelling. In the embodiment, since the partition 23 shuts the axial ducts 5 in the middle, the flow travelling axially inward in the axial ducts 5 can only reach a position of the partition 23 and the cooling medium travels toward the stator 6 through the clearance 22 on a nearer area of the axial ducts 5 to inlets than (the position of) the partition 23. The cooling medium travelling toward the stator 6 through the clearance 22 passes radially outward through the radial ducts 9 to be fed to the heat exchanging part 11 while taking heat from the stator 6 through the radial ducts 9 provided on the stator 6.

On the other hand, the cooling medium having passed through the stator winding ends 8A, 8B is fed to the heat exchanging part 11 adjacent to the stator 6 while taking heat from the stator winding ends 8A, 8B.

That is, the cooling medium of the flow passing in the claw-pole type rotor 2 and the stator 6 and the cooling medium of the flow passing through the stator winding ends 8A, 8B take heat from the claw-pole type rotor 2 and the stator 6 in respective routes to join together radially outwardly of the stator 6 (including the stator winding ends 8A, 8B) in a state of being raised in temperature.

The cooling media thus joined travel toward the heat exchanging part center side 11C of the heat exchanging part 11. As described above, the heat exchanger tubes 17 communicating axially in the heat exchanging part 11 to permit an outside air to pass therethrough are mounted inside the heat exchanging part 11, and an outside air passes therein whereby the heat exchanger tubes 17 are low in temperature as compared with the electric rotating machine body 10.

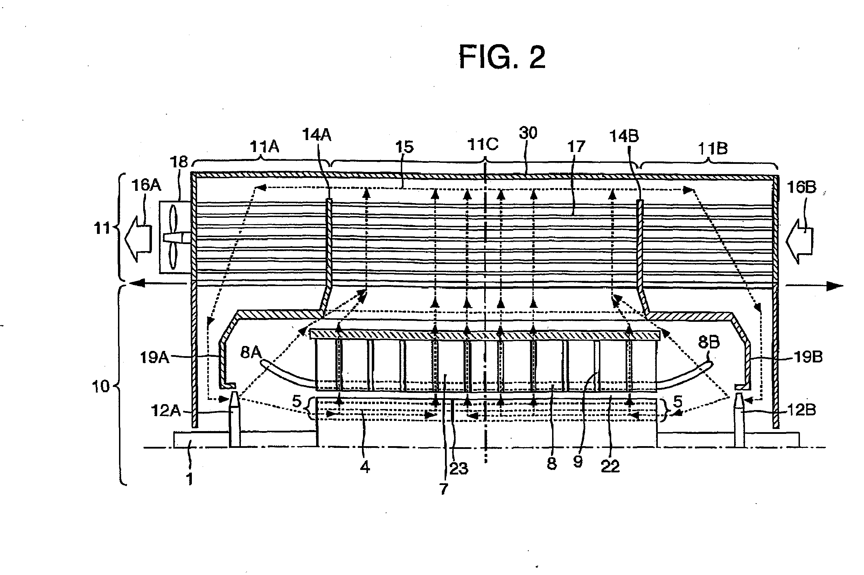

A high-temperature cooling medium having been put in such state and travelled to the heat exchanging part axial center 11C comes into contact with the heat exchanger tubes 17, through which an outside air passes, to have heat taken therefrom by the heat exchanger tubes 17 and is gradually cooled to become low in temperature. The cooling medium having become low in temperature passes through the heat exchanging part axial center 11C and then branches into both axial sides (a left and right direction in Fig. 2) in an upper region of the sealed vessel 30. The cooling media as branched comes to the heat exchanging part axial end side 11A and the heat exchanging part axial end side 11B, which is partitioned by the sealed vessel 30 and the partition wall 14B, and also come here into contact with the heat exchanger tubes 17 whereby the heat exchanger tubes 17 further have heat taken therefrom subsequent to the heat exchanging part axial center 11C to be cooled.

The cooling medium having taken heat from the claw-pole type rotor 2 and the stator 6 to rise in temperature flows on the center side and the axial end side in the heat exchanging part 11 to be adequately cooled.

The cooling medium having passed through the heat exchanging part axial end sides 11A, 11B is led to the inner fans 12A, 12B, respectively, along the guides 19A, 19B mounted inside the electric rotating machine body 10 to be again used for cooling of the claw-pole type rotor 2 and the stator 6. The cycle described above is repeated to perform cooling of the electric rotating machine.

Here, an explanation will be given to an effect produced in the first embodiment. In the embodiment, as described above, the axial ducts 5 are provided with the partition 23 in a position offset toward the exhaust side from the center position in the axial direction. Thereby, a cooling medium travelling axially inward in the axial ducts 5 is pushed radially outwardly of the claw-pole type rotor 2 on a cooling-medium inflowing side (both on an intake air side and an exhaust side) relative to a position, in which the partition 23 is present, in the axial direction. Most of the cooling medium having been thus pushed radially outwardly flows to the radial ducts 9 of the stator 6 disposed on the cooling-medium inflowing side relative to a position, in which the partition 23 is present, in the axial direction. Accordingly, the flow passage can be divided by a flow passage of a cooling medium entering the axial ducts 5 of the claw-pole type rotor 2 from the intake air side and a flow passage of a cooling medium entering the axial ducts 5 of the claw-pole type rotor 2 from the exhaust side. Since the partition 23 is present in a position offset toward the exhaust side from the central position in the axial direction, those radial ducts 9, through which the cooling medium passes, is made small in number on the exhaust side and a cooling medium passing through each one of the radial ducts 9 on the exhaust side is increased in volume as compared with the case where the partition is not present and the case where the partition is in the central position in the axial direction even when the partition 23 is present. Therefore, a cooling medium passing through the radial ducts 9 is increased in velocity of flow on the exhaust side and so an improvement in heat transfer coefficient is achieved with respect to heat transfer to a cooling medium from the stator 6. Accordingly, the effect of cooling the stator 6 can be heightened on the exhaust side. On the other hand, since the partition 23 is present in a position offset toward the exhaust side from the central position in the axial direction, those radial ducts 9, through which the cooling medium passes, is made large in number on the intake air side and a cooling medium passing through each one of the radial ducts 9 is decreased in volume as compared with the case where the partition is not present and the case where the partition is in the central position in the axial direction even when the partition 23 is present. When a cooling medium passing through each one of the radial ducts is decreased in volume, a decrease in velocity of flow is brought about and the stator 6 is decreased in heat transfer coefficient. Therefore, the effect of cooling the stator 6 is decreased on the intake air side as compared with that on the exhaust side.

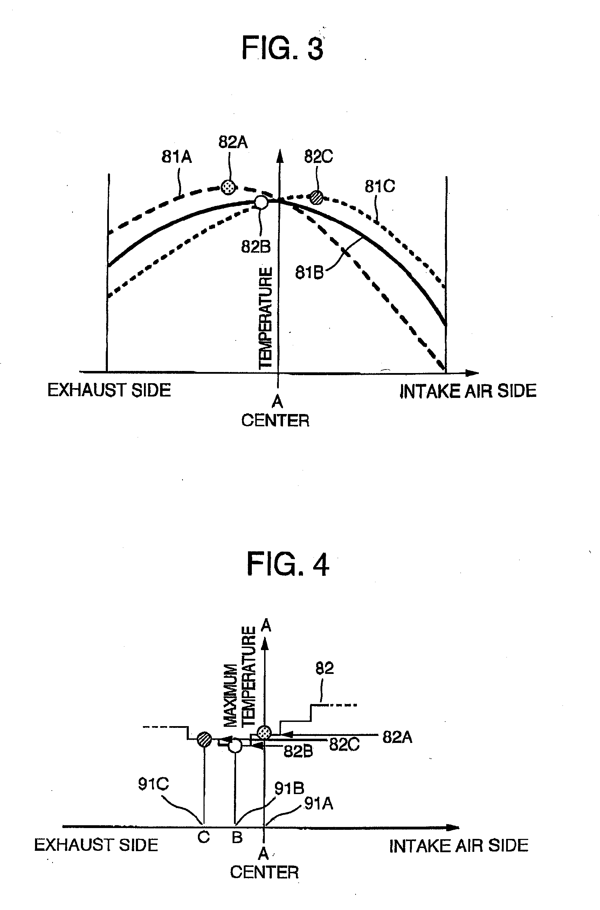

Fig. 3 shows a manner of transition of a temperature profile of the stator winding 8 in the axial direction in the case where a position of the partition 23 is shifted to B, C in Fig. 4 on the exhaust side of the heat exchanger from a central position (A position in Fig. 4) in the axial direction. A temperature profile 81A is one when the partition 23 is present in A position, and at this time, a maximum temperature 82A of the stator winding 8 occurs in a position offset toward the exhaust side from the central position in the axial direction.

Subsequently, a temperature profile 81B is one when the partition 23 is present in B position, and at this time, a maximum temperature 82B of the stator winding 8 is in a position a little offset toward the exhaust side from the central position in the axial direction, the maximum temperature 82B being low as compared with the maximum temperature 82A in the case of the temperature profile 81A.

A temperature profile 81C is one when the partition 23 is present in C position further shifted to the intake air side from the B position, and at this time, a maximum temperature 82C of the stator winding 8 is in a position further offset toward the intake air side from the position of the maximum temperature 82B in the axial direction, the maximum temperature 82C being conversely high as compared with the maximum temperature 82B in the temperature profile 81B. In this case, as result of a decrease, described above, in the effect of cooling on the intake air side of the heat exchanger exceeding an improvement in the effect of cooling on the exhaust side, a maximum temperature is conversely changed to tend to rise.

Fig. 4 shows changes in a maximum temperature of the stator winding 8 when the partition 23 is appositionally changed in the axial direction. Here, 91A, 91B, and 91C, respectively, indicate positions of the partition 23 in the axial direction when the stator winding 8 assumes the temperature profiles 81A, 81B, 82C in the axial direction. As seen from the figure, as the partition 23 is shifted toward the exhaust side of the heat exchanger from the intake air side of the heat exchanger, a gradual decrease in maximum temperature is brought about and a position, in which a maximum temperature occurs, in the axial direction is shifted toward the intake air side. When a position of the partition 23 in the axial direction is in the vicinity of a position, in which a maximum temperature occurs, in the axial direction, the maximum temperature assumes a minimum value (B position). Also, as the partition is shifted further toward the exhaust side from the B position, a maximum temperature makes a change to tend to rise. In the embodiment, by providing the partition 23 in the position 91B, in which a position of the partition 23 is equal to a position, in which a maximum temperature occurs, it is possible to decrease a maximum temperature of the stator 6 in the axial direction, thus enabling leveling a temperature profile. Also, while an explanation has been given only to the stator 6, a cooling medium travels axially in the claw-pole type rotor 2 and then is changed to be directed to a radially outside diameter side to pass through the clearance 22 to enter the radial ducts 9 of the stator 6. Accordingly, that velocity of flow, at which the cooling medium passes radially through the ducts of the rotor 2, increases and heat transfer of the cooling medium flowing radially through the ducts of the claw-pole type rotor 2 is improved in heat transfer coefficient, so that there is a possibility that for the claw-pole type rotor 2, the cooling effect is heightened and a temperature profile is leveled.

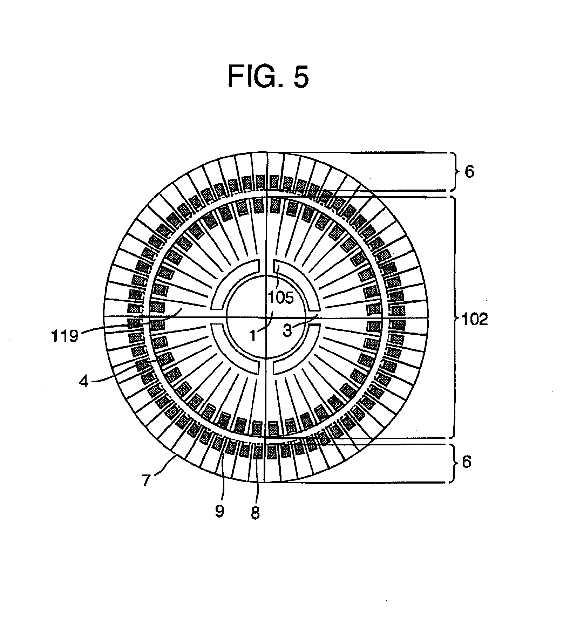

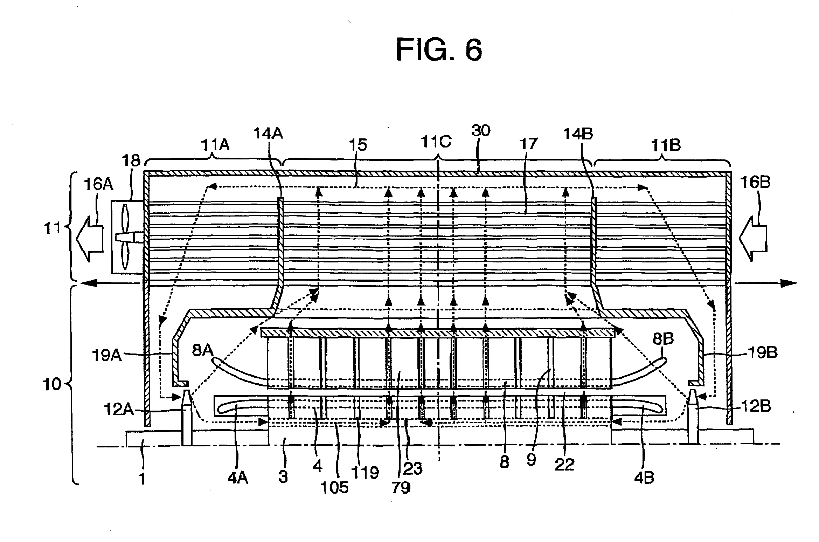

Subsequently, a second embodiment of a sealed type electric rotating machine according to the invention will be described with reference to Figs. 5 and 6. While a claw-pole type rotor is used as a rotor in the first embodiment, a disk-shaped rotor 102 is used as a rotor in the second embodiment.

An explanation will be given to the structure of the disk-shaped rotor 102 in the embodiment. The disk-shaped rotor substantially comprises a rotating shaft 1, a rotor core 103 fitted onto the rotating shaft, and a rotor winding coil 104 wound round the rotor core 103. Axial ducts 105 extending through the rotor core 103 in an axial direction are provided on the rotor core 103 toward the rotating shaft 1. The axial ducts 105 and a clearance 22 are communicated to each other through radial ducts 119 provided on the rotor core 103. A partition 23 is provided on the axial ducts 105 in a position offset toward an exhaust side from a center position thereof.

With such construction, a cooling medium is fed to the clearance 22 through the radial ducts 119 from the axial ducts 105 on a cooling-medium inflowing side (both on an intake air side and an exhaust side) relative to the partition 23 in the axial direction.

Also, in the embodiment, the axial ducts 105 comprise the partition 23 in a position offset toward the exhaust side from a center position thereof in the axial direction whereby for the same reason as that in the first embodiment, it is possible to decrease a maximum temperature of a stator 6 in the axial direction, thus enabling leveling a temperature profile. Also, while an explanation has been given only to the stator 6 in the first embodiment, it is also possible in the embodiment to level a temperature profile of the disk-shaped rotor 102 since a cooling medium enters the stator 6 after the passage through the radial ducts 119 in the disk-shaped rotor 102.

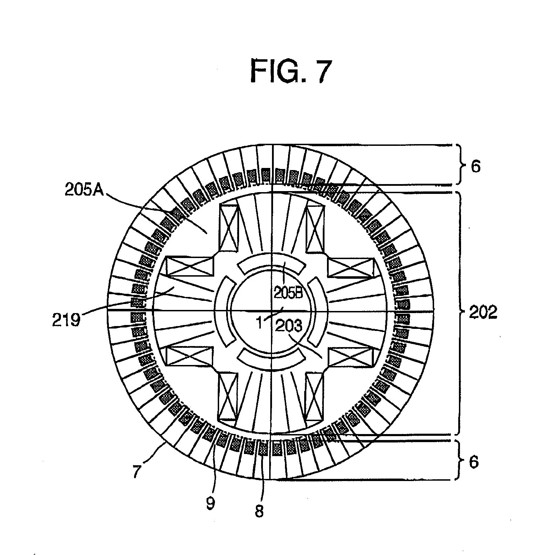

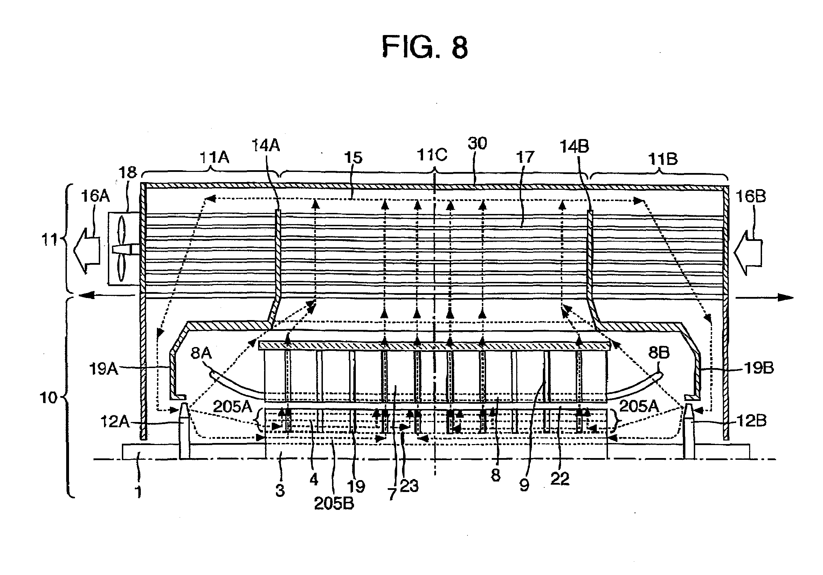

Subsequently, a third embodiment of a sealed type electric rotating machine according to the invention will be described with reference to Figs. 7 and 8. While a rotor adopts a claw-pole type structure in the first embodiment and a disk-shaped structure in the second embodiment, the third embodiment adopts a claw-pole type rotor 202 having axial ducts, which are characteristic of the first and second embodiments, in combination.

An explanation will be given to the structure of the claw-pole type rotor 202 in the embodiment. The claw-pole type rotor 202 comprises a rotating shaft 1, a rotor core 203 fitted onto the rotating shaft 1 to rotate together with the rotating shaft, and a rotor winding coil 204 wound round the rotor core 203, the rotor core 203 having pole heads 21 and pole drum portions 20, which are smaller in width than the pole heads 21, the rotor winding coil 204 being wound round the pole drum portions 20. Axial ducts 205A are formed between adjacent pole portions in an axial direction. Also, the rotor core 203 is provided with axial ducts 205B, which enable a cooling medium to pass through the rotor 202 in the axial direction. The axial ducts 205B and a clearance 22 are communicated to each other through radial ducts 219 provided on the rotor core 203.

With the claw-pole type rotor 202 described above, when entering the claw-pole type rotor 202, a cooling medium can enter both the axial ducts 205A and the axial ducts 205B. In case of entering the axial ducts 205A, a cooling medium is fed directly to the clearance 22, and in case of entering the axial ducts 205B, a cooling medium is fed to the clearance 22 through the radial ducts 219.

Also, in the embodiment, the axial ducts 205A, 205B comprise a partition 23 in a position offset toward an exhaust side from a center position in the axial direction whereby for the same reason as that in the first embodiment, it is possible to decrease the stator 6 and the claw-pole type rotor 202 in maximum temperature in the axial direction, thus enabling leveling a temperature profile. Also, the claw-pole type rotor 202 arranged inside the stator 6 can be leveled in temperature profile.

In addition, while the first to third embodiments have been described with respect to the case where the partition 23 is formed by the use of a laminated steel sheet not formed with any notch, at least one axial duct out of a plurality of axial ducts provided in a circumferential direction comprises a partition 23 in a position offset toward an exhaust side from a center position thereof in an axial direction and then a cooling medium flowing into the axial ducts provided with the partition 23 from the exhaust side to pass through the radial ducts can be increased in velocity of flow, so that the stator 6 and hence the rotor can be leveled in temperature profile as compared with the case where any axial duct provided with the partition 23 is not present.

Also, the stator 6 and hence the rotor can be leveled in temperature profile when in order that a position of a partition in an axial direction is made different for each one of a plurality of axial ducts provided in a circumferential direction, several laminated steel sheets, in which a part of notches provided for formation of axial ducts is not provided and partitions are provided thereby, are arranged in positions toward an exhaust side from a center position in an axial direction to provide partitions in different positions in the axial direction from an axial duct to an axial duct in a manner to prevent the partitions from overlapping together in the circumferential direction. Also, in this case, when for at least one axial duct out of the plurality of axial ducts being present in the circumferential direction, a partition 23 is provided in a position offset toward an exhaust side from a center position in an axial direction, the stator 6 and hence the rotor can be leveled in temperature profile.

Also, while the embodiments list as an example only the case where the partition 23 is formed by a laminated steel sheet, that construction, which can perform the action of cutting off an axial flow in the axial ducts described above, can be made a partition, so that the stator 6 and the rotor can be leveled in temperature profile.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A sealed type electric rotating machine comprising
a rotor (2, 102, 202) that rotates together with a rotating shaft (1) and has an axial duct (5, 105, 205), through which a cooling medium passes,
a stator (6) arranged radially outwardly of the rotor (2, 102, 202) to be opposed thereto with a predetermined clearance therebetween and having a radial duct (9), through which a cooling medium passes in a radial direction,
a heat exchanging part (11) arranged adjacent to the stator (6), having a heat exchanger tube (17), through an interior of which an outside air passes from an intake air side to an exhaust side, and performing heat exchange with a cooling medium having cooled an interior of the electric rotating machine,
a sealed vessel (30) receiving therein the rotor (2, 102, 202), the stator (6), and the heat exchanging part (11), and
a partition (23) provided midway the axial duct (5, 105, 205) of the rotor (2, 102, 202) to cut off a cooling medium against passing through the axial duct (5, 105, 205) in an axial direction, and
wherein the partition (23) is provided toward the exhaust side relative to an axially central position.

2. The sealed type electric rotating machine according to claim 1, wherein the axial ducts (5, 105, 205) are present in plural in a circumferential direction and the partitions (23) are provided every the axial duct (5, 105, 205) in different positions on the exhaust side in the axial direction.

3. The sealed type electric rotating machine according to claim 1, wherein the axial ducts (5, 105, 205) are present in plural in a circumferential direction and those axial ducts (5, 105, 205), in which the partitions (23) are provided in the same positions on the exhaust side in the axial direction, out of the axial ducts (5, 105, 205) being present in plural are present in two or more.

4. The sealed type electric rotating machine according to claim 1, wherein the axial ducts (5, 105, 205) are present in plural in a circumferential direction and the partition in at least one of the axial ducts (5, 105, 205) is provided in a different position from those of the remaining partitions (23) toward the exhaust side from a center in the axial direction.

5. The sealed type electric rotating machine according to claim 2, wherein that axial duct (5, 105, 205), which is in communication in the axial direction, out of the plurality of the axial ducts (5, 105, 205) is present in at least one.

6. The sealed type electric rotating machine according to claim 1, wherein the rotor is a claw-pole type rotor (2) comprising a rotor core (3), which rotates together with the rotating shaft (1) and has pole heads (21) and pole drum portions (20), and a rotor winding coil (4) wound round the rotor core (3), and the axial ducts (5) is formed so that a cooling medium flows between the pole head (21) and the pole drum portion (20) and a pole head (21) and a pole drum portion (20), which are adjacent thereto, in the axial direction.

7. The sealed type electric rotating machine according to claim 1, wherein the rotor is a disk-shaped rotor (102) comprising a rotor core (103), which rotates together with the rotating shaft (1), and a rotor winding coil (104) wound round the rotor core (103), and the axial ducts (105) is formed so that a cooling medium flows on a side of the rotor core (103) toward the rotating shaft (1) in the axial direction.

8. The sealed type electric rotating machine according to claim 1, wherein the rotor comprises a rotor core (203), which rotates together with the rotating shaft (1) and has pole heads (21) and pole drum portions (20), and a rotor winding coil (204) wound round the rotor core (203), and the axial ducts (205) is formed so that a cooling medium flows between the pole head (21) and the pole drum portion (20) and a pole head (21) and a pole drum portion (20), which are adjacent thereto, and in an interior of the rotor core (203), respectively, in the axial direction.

9. The sealed type electric rotating machine according to claim 1, wherein the partition (23) is formed from a part of a laminated steel sheet that forms the rotor core.

10. A sealed type electric rotating machine comprising a rotor (2, 102, 202) that rotates together with a rotating shaft (1) and has an axial duct (5, 105, 205), through which a cooling medium passes in an axial direction, a stator (6) arranged radially outwardly of the rotor (2, 102, 202) to be opposed thereto with a predetermined clearance therebetween, radial ducts (9) formed at predetermined intervals on the stator (6) in an axial direction to extend through the stator (6) in a radial direction, a heat exchanging part (11) arranged adjacent to the stator (6), having a heat exchanger tube (17), through an interior of which an outside air passes from an intake air side to an exhaust side, and performing heat exchange with a cooling medium having cooled an interior of the electric rotating machine, and a sealed vessel (30) receiving therein the rotor (2, 102, 202), the stator (6), and the heat exchanging part (11), and wherein a cooling medium passing through each one of the radial ducts (9) is larger in quantity on the exhaust side than on the intake air side.
